# EUROPEAN PATENT APPLICATION

(11) **EP 1 916 858 A1**
(43) Date of publication of application: **30.04.2008**
(21) Application number: 06301087.0
(22) Date of filing: 24.10.2006
(51) Int. Cl.: H04Q 7/38

(54) **Inter-RAT handover optimization**

(71) Applicant: Motorola, Inc., Schaumburg, IL 60196 (US)
(72) Inventor: Durand, Christophe, 31000, TOULOUSE (FR); Chaysinh, Stéphane RESIDENCE ANDRE BOUSQUAIROAL, 31860, PINS JUSTARET (FR); Wu, Ping, HOFFMAN ESTATES, IL, 60192 (US)
(74) Representative: Joly, Jean-Jacques

(57) **Abstract**

While associated with a first network, at least one signal from a first cell and at least one signal from a second cell are received from a second network. At least one parameter of each of the first signal and the second signal are measured. An attempt is made to determine whether each of the first cell and the second cell meet a predetermined criterion. A message is sent to provider equipment of the first network that includes a ranking of the first cell and the second cell with respect to the at least one parameter. An indication is provided in the message as to whether each cell meets the predetermined criterion or why it cannot be determined that the cell meets the predetermined criterion. The first network utilizes the indication to select an either the first cell or second cell for handover.

## Description

### SUMMARY

Prior to handover, a network will often instruct a wireless device to measure the signal strength of cells on other nearby networks. The network will then utilize these measurements to select the best target cell for handover. Often, the network selects the cell with the highest signal strength as the best target cell for handover.

A problem exists, however, when the network does not require the wireless device to verify the identity of the cells which it has measured. Without, identity verification, utilizing signal strength as the criteria for handover is inefficient. This is because a cell with the highest signal strength might not be the best candidate for handover if its identity has not been verified. Accordingly, what is needed is a system and method for handover optimization by providing the wireless device with a mechanism to report why identity verification is not possible.

### BRIEF DESCRIPTION OF THE DRAWINGS

For the purpose of facilitating an understanding of the subject matter sought to be protected, there are illustrative embodiments in the accompanying drawing, from an inspection of which, when considered in connection with the following description and claims, the subject matter sought to be protected, its construction and operation, and many of its advantages should be readily understood and appreciated
Fig. 1 depicts a first network, a second network, and user equipment capable of interacting with each.
Fig. 2 is a flowchart depicting an exemplary process by which the user equipment of Fig. 1 provides inter-RAT measurement reports to the first network.
Fig. 3 is a flowchart depicting an exemplary process by which the user equipment of Fig. 1 determines a cause of BSIC verification failure in the process of Fig. 2.
Fig. 4 is a flowchart depicting an exemplary process by which the first network of Fig. 1 utilizes the inter-RAT measurement reports provided in Fig. 2.

### DETAILED DESCRIPTION

In one example, a method is provided. In the method, while associated with a first network, at least one signal is received from a first cell and at least one signal is received from a second cell of a second network. At least one parameter is measured of each of the first signal and the second signal. A determination is attempted as to whether each of the first cell and the second cell meet a predetermined criterion. A message is sent to the first network that includes a ranking of the first cell and the second cell with respect to the at least one parameter. Further for each of the first cell and the second cell, at least one of an indication that the cell meets the predetermined criterion or an indication of a cause as to why it cannot be determined that the cell meets the predetermined criterion is provided in the message.

In another example, a method is provided. Communication is established with a cell in a first network while being associated with another network. An attempt is made to determine whether or not the cell meets a predetermined criterion. If it is not possible to determine if the cell meets the predetermined criterion. An indication is provided to a controller in the other network reporting a cause as to why it was not possible.

In a further example, while in a first network, a message is received from a mobile device that includes a ranking of a first cell and a second cell with respect to the at least one parameter and at least one of an indication that each cell meets a predetermined criterion or a cause as to why the mobile device can not determine whether the cell meets the predetermined criterion. The message is utilized to initiate handoff of the mobile device to one of the first cell and the second cell.

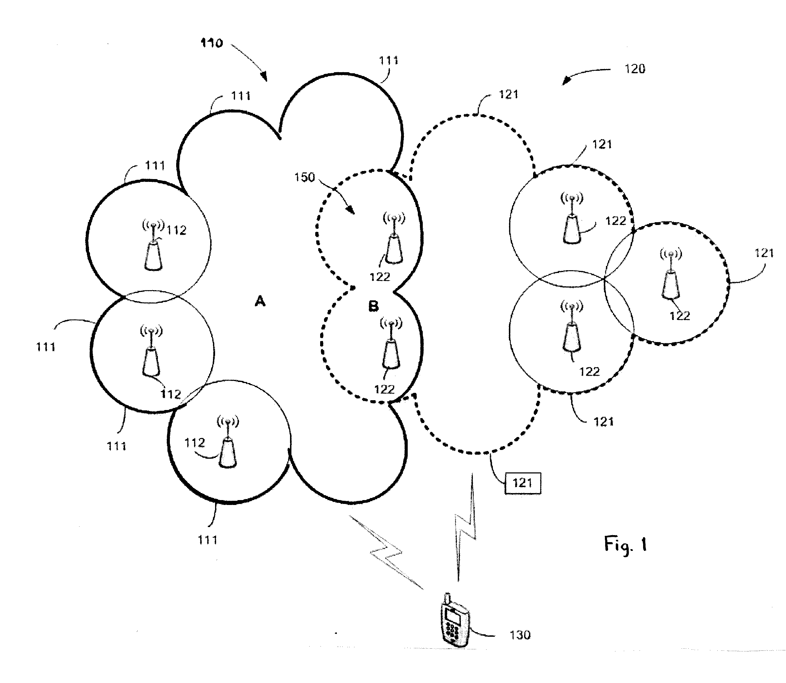

Referring to Fig. 1, in one example, a system 100 includes a first network 110, a second network 120, and at least one instance of mobile device user equipment (UE) 130. The UE 130 in one example is a dual mode wireless device capable of operation with either network 110 or network 120.

UE 130 accesses each network 110, 120 through employment of a radio access technology (RAT). Examples of RATs, include but are not limited to, UTRA (UMTS Terrestrial Radio Access), CDMA2000®, Global System for Mobile Communications (GSM), GSM EDGE Radio Access (GERAN). RATs in one example use spread spectrum modulation formats (e.g. CDMA, OFDMA) and non-spread spectrum (e.g. TDMA, FDMA) modulation formats and variations and evolutions thereof.

The design and operation of these networks is understood so a detailed discussion of each will not be provided. Nevertheless, it should be noted that each network includes provider equipment, comprised of hardware and/or software components that are needed to for the network to function. Detailed descriptions of these components have been omitted for the sake of brevity and because the descriptions of these components are not necessary to an understanding of that is disclosed hereafter. Nevertheless, such networks typically include components, such as base stations, base station controllers, switching systems, and other operation and support systems.

Referring to Fig. 1, for illustrative purposes, network 110 comprises a coverage area comprised of a plurality of cells 111. Each cell 111 includes a base station 112 that is responsible for transmitting/receiving data to/from user equipment 130. Similarly, network 120 includes a coverage area composed of a plurality of cells 121, which each include a base station 122. The respective coverage areas of network 110 and network 120 overlap to form an overlapping coverage area 150. In the overlapping coverage area 150, UE 130 can use either network 110 or network 120.

UE 130 in one example comprises a dual mode device capable of communicating with each network 110, 120. Examples of such devices include, but are not limited to, mobile phones, pagers, radios, personal digital assistants (PDAs), mobile data terminals, laptop computers, application specific gaming devices, video gaming devices incorporating wireless modems, and combinations or subcombinations of these devices. Such devices generally include components such as processors, controllers, memory components, user interface devices, data transmission logic, networks interfaces, antennas, and the like. The design and operation of these devices is well known so a detailed description of each possibility will be omitted.

Further referring to Fig. 1, it should be understood that the components of networks 110, 120, and user equipment 130 are formed of one or more computer software and/or hardware components. A number of such components can be combined or divided. In one example, an exemplary component of each device employs and/or comprises a series of computer instructions written in or implemented with any of a number of programming languages, as will be appreciated by those skilled in the art.

The components of networks 110, 120, and UE can each employ at least one computer-readable signal-bearing medium. An example of a computer-readable signal-bearing medium is a recordable data storage medium such as a magnetic, optical, and/or atomic scale data storage medium. In another example, a computer-readable signal-bearing medium is a modulated carrier signal transmitted over a network. A computer-readable signal-bearing medium can store software and/or logic components that are employable to carry out the functionality described herein.

Referring further to Fig. 1, if UE 130 were associated with network 110 and moved from point "A" to point "B", the signal level between base stations 112 and UE 130 might begin to diminish. Accordingly, network 110 might decide that it would be worthwhile to begin preparation to handover UE 130 to network 120.

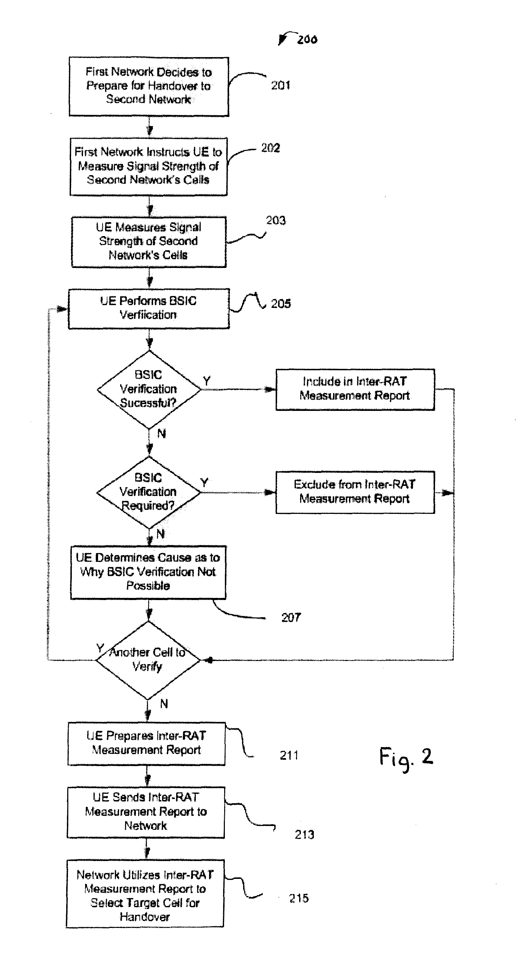

Referring to Fig. 2, an exemplary handover process 200 is now described for illustrative purposes. In the example, network 110 is a UTRA network and network 120 is a GSM network. Additional information regarding handover can be found in 3GPP 25.331, which is hereby incorporated by reference.

In step 201, network 110 determines to prepare for a handover of UE to another network. In step 202, network 110 instructs UE 130 to measure at least one parameter of signals emanating from nearby GSM cells 121 and to report the measurements to the network. For instance, the network 110 could instruct the U E 110 to measure at least one parameter of N GSM cells, where N = 1...16. In one example, the at least one parameter that the UTRA network 110 instructs UE 130 to measure is signal strength. As part of this instruction, the network 110 in one example provides UE 130 with Base Station Identity Codes (BSIC) and Absolute Radio Frequency Channel Number (ARFCN) of neighboring GSM cells 121.

In one example, the network 110 also instructs the UE 130 whether or not to attempt to determine a predetermined criterion for each cell that UE 130 measures. In one example, the predetermined criterion is whether the cell can be BSIC verified. If the network 110 requires BSIC verification, then UE 130 will only send measurement reports for BSIC verified cells. If the network does not require BSIC verification, then the UE 130 will send measurement reports for all cells of which it succeeded in taking measurements.

In step 203, the UE 130 will measure the signal strengths of available signals from the GSM cells 121. In one example, the UE 130 utilizes the gsm-CarrierRSSI to measure the signal strength of the GSM network.

In step 205, the UE will perform BSIC verification. The UE 130 performs BSIC verification by monitoring the ARFCN of each GSM cell 121 of which it measured signal strength. When the UE 130 receives a BSIC from a cell 121, the UE 103 compares the detected BSIC to an expected BSIC, which is typically one of the BSICs received in step 201 from network 110. If the detected BSIC detected the expected BSIC, then BSIC verification is successful and the cell 121 can be identified as BSIC verified in the measurement report.

If BSIC verification is not successful and the network 110 requires BSIC verification, then the cell in question is not included in the measurement report. If there is another cell 121 on which to perform BSCI verification, the UE will perform BSIC verification on the cell 121. If not, the UE 130 will prepare the measurement report, as will be further described herein.

If BSIC verification is not successful and the network 110 does not require BSIC verification, then in step 207, the UE 130 will determine a cause as to why BSIC verification was not possible.

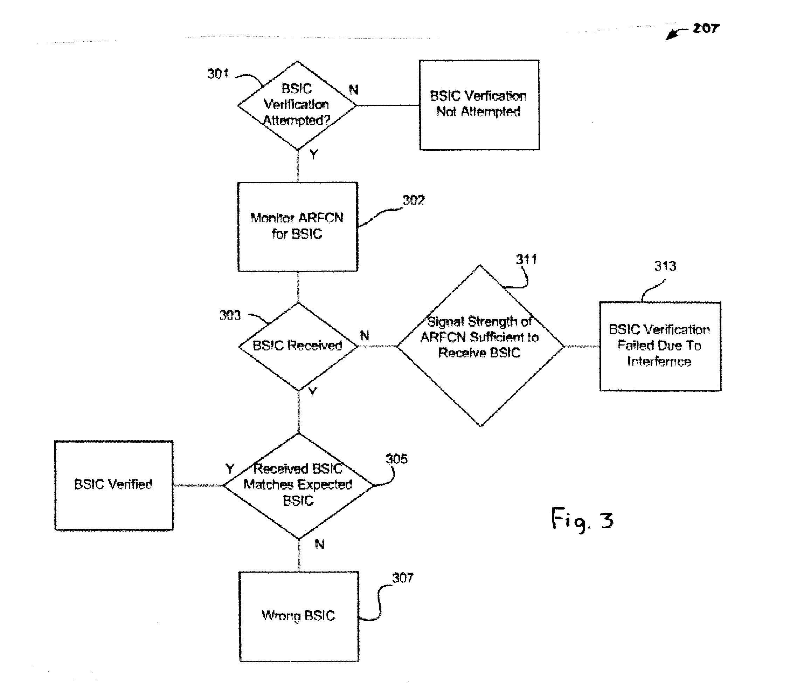

Referring to Fig. 3 a more detailed description of step 207, by which the UE 130 determines why BSIC verification was not possible, will now be provided for illustrative purposes.

There are many reasons why a BSIC may not be verified. In one instance, BSIC identification might fail due to interference in the ARFCN used by a particular cell 121. In another instance, due to poor cell planning, a BSIC detected from a cell 121 might not match an expected BSIC (e.g. the BSIC received from the network requesting signal measurement). In another instance, BSIC acquisition might not be attempted because an appropriate compressed mode pattern might not yet be activated to allow the UE 110 to perform the BSIC identification.

Accordingly, referring to Fig. 3, the UE 130 determines which of these causes prevented BSIC verification in step 205. In step 301, the UE 130 determines whether BSIC verification was not attempted. That is, whether verification was not possible because it could not occur during a predetermined time period. For example, if the UE 130 cannot monitor the ARFCN of the cell 121 in question because appropriate compressed mode gaps have not been activated, it would be inefficient to wait too long for such gaps to be activated. Accordingly, if. after a predetermined amount of time, the UE 130 has not been able to monitor the ARFCN for the BSIC of a particular cell 121, due to compressed mode gaps not being activated, the UE 130 will not attempt BSIC verification.

If BSIC verification was attempted but failed, then in step 302, the UE 130 monitors the ARFCN of the particular cell 121 for which it measured signal strength. In step 303, UE 130 determines whether a BSIC has been received from the base station 122 of the cell 121. If a BSIC has been detected, then in step 305, the UE 130 determines whether or not the BSIC matches the expected BSIC sent from network 110. If the BSIC does not match the expected BSIC, then in step 307, the UE 130 determines that BSIC verification failed because it received the wrong BSIC.

If, in step 303, the UE 130 determines that a BSIC has not been detected, over the ARFCN of a particular cell 121, then in step 311, the UE 110 will determine if the strength of signals received over ARFCN is sufficiently high that a BSIC should have been detected. If signals received over ARFCN are sufficiently high and a BSIC has not been detected, then in step 313, the UE 130 determines that BSIC verification cannot occur due to interference. In another example, the UE 110 will measure the ARFCN and determine whether or not the BSIC has been detected. If the BSIC has not been detected, the UE 130 will periodically monitor the ARFCN for detection of the BSIC. If, when the UE 130 is ready to send the measurement report to the network, the BSIC is still not detected, the UE will determine in step 313 that the BSIC cannot be detected due to interference.

Referring now to Fig. 2, after a cause is determined for BSIC verification failure, the UE 110 will determine whether or not there is another cell 121 on which to perform BSIC verification. If so, then the UE will perform BSIC on the other cell 121. If not, the UE will prepare the inter-RAT measurement report in step 211.

In step 211, the inter-RAT measurement report includes a listing of cells 121, which the UE 130 measured. In one example, the list is sorted in descending order with the cell with the highest signal strength listed first. Additional information, such as GSM-CarrierRSSI for each selected ARFCN will be included in measurement report and information about BSIC verification of each ARFCN will be included in measurement report, can also be included in the measurement report.

If the network 110 required BSIC verification, then only GSM cells 121 that were measured and BSIC verified are included in the report. Any GSM cells 121 that were measured, but not BSIC verified, are excluded from the report. On the other hand, if the network did not require BSIC verification, then all of the GSM cells 121 that were measured are included in the report. If BSIC verification was successful for a GSM cell then the GSM cell is identified as BSIC verified. If BSIC verification was not successful for a GSM cell 121, then the UE 110 will include an information element in the BSIC measurement report that includes a cause as to why the BSIC verification was not successful for that particular cell. Using the examples provided with respect to Fig. 3, the information element could include the following values:
(1) BSIC identification attempted but failed - interference
(2) BSIC identification attempted but failed - wrong BSIC
(3) BSIC identification not attempted

Referring further to Fig. 2, In step 213, the UE 130 sends the inter-RAT measurement report to the network 110, and in step 215, the network utilizes the measurement report to select a target cell 121 to which it will handover the UE 130.

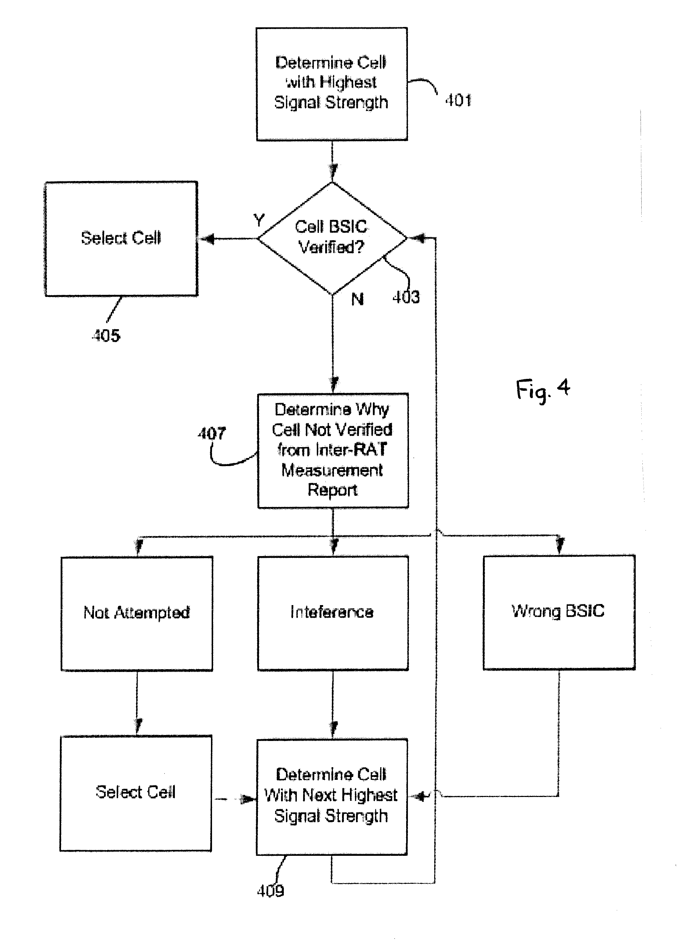

Referring to Fig. 4, a description of how the network utilizes the inter-RAT measurement report, including the information element, to determine a target cell for handover will now be described in more detail. Such a description will make the value of providing the information element in the inter-RAT measurement report even more readily apparent.

It should be noted that if network 110 does not request BSIC verification, then UE 130 in one example will include, in the report, signal strength measurements for a predetermined number GSM cells regardless if the BSIC is "verified" or "non-verified". (See e.g. 3GPP 25.331 section 8.6.7.5.) Using conventional methods, the network assumes that the cell with the highest signal strength is the best candidate for handover. However, this is not always the case if the strongest cell has not been BSIC verified.

If BSIC verification succeeds for a particularly cell 121, then there is a greater probability that handover will succeed. This is particularly true, if BSIC verification fails because of interference or because the wrong BSIC was received. If BSIC identification cannot be determined because it was not attempted, then it is unknown whether there is no information that could improve probability of the handover decision.

Accordingly, in step 401, the network 110 determines from the inter-RAT measurement report which cell 121 has the highest signal strength. In step 403, the network determines whether the cell 121 with the highest signal strength has been BSIC verified. If the cell with the highest signal strength has been BSIC verified, then in step 405, the network 110 selects the cell with the highest signal strength for handover. If the cell with the highest signal strength has not been BSIC verified, then, in step 407, the network 110 determines, from the information element in the measurement report, why the cell with the highest signal strength has not been verified. If the cell has not been verified because BSIC identification was not attempted, then the cell with the highest signal strength with failure cause "not attempted" is selected for handover (neither the U E 130 nor the network 110 have any extra information that could improve the handover decision and so the network attempts the handover to the cell with the highest signal strength). If the cell with the highest signal strength was not verified due to interference or because of the wrong BSIC, then in step 409, the cell 121 with the next highest signal strength is determined and then evaluated as before. If the cell 121 with the next highest signal strength is either BSIC verified or not BSIC verified because BSIC identification was not attempted, then the cell with the next highest signal strength is selected for handover. Otherwise, the cell with the third highest signal strength is evaluated, and so on. In this manner, network 110 can make a more intelligent decision about which cell to target for handover.

Alternatively, if, in step 407, the network 110 determines that BSIC verification for the cell with the highest signal strength was "not attempted", the network 110 may elect to proceed to step 409. If in step 409, no GSM cell is verified after the network evaluates the reported cells, then the network 110 can select the cell 121 with the highest signal strength but "not attempted" as the target cell for handover.

It should be noted that the particular order of steps set forth in Figs. 2-4 are provided for illustrative purposes only and in no way should be construed as limiting either the disclosure or the claimed subject matter. For instance, it should be understood that signal strength measurements can be reported individually to the network or in one report. Attempts at BSIC verification could occur after all signal strength measurements have been taken or could occur after each signal strength measurement is taken.

A description of one exemplary embodiment of a measurement report will now be provided for illustrative purpose. In one example, the information element can be added to the Measurement Report as set forth in 3GPP 25.331 as follows:
**8.6.7.6 Inter-RAT reporting quantity**
If the IE "Inter-RAT reporting quantity" is received by the UE, the UE shall:
1> store the content of the IE to the variable MEASUREMENT IDENTITY.
If the IE "Inter-RAT measurement quantity" is received and CHOICE system is GSM, the UE shall check each quantity in the GSM choice. The UE shall include measured results in MEASUREMENT REPORT as specified in the IE "Inter-RAT reporting quantity" with the following restrictions:
1 > if the UE has not confirmed the BSIC of the measured cell:
   2> if no compressed mode pattern sequence specified with measurement purpose "Initial BSIC identification" is active and according to its capabilities the UE requires compressed mode to measure this, the UE is not required to include the "inter-RAT cell id" in the IE "Inter-RAT measured results list", when a MEASUREMENT REPORT is triggered.
1> if the UE has confirmed the BSIC of the measured cell, then:
   2> if no compressed mode pattern sequence specified with measurement purpose "Initial BSIC identification" nor "BSIC re-confirmation" is active and according to its capabilities the UE requires compressed mode to measure this, the UE is not required to include the "inter-RAT cell id" in the IE "Inter-RAT measured results", when a MEASUREMENT REPORT is triggered. If no compressed mode pattern sequence with measurement purpose "GSM carrier RSSI measurements" is active and according to its capabilities the UE requires compressed mode to measure this, the UE may include "inter-RAT cell id" in MEASUMENT REPORT without "GSM carrier RSSI" even if it is defined in the IE "Inter-RAT reporting quantity".
1> if the IE "UTRAN estimated quality" is set to "TRUE":
   2> ignore that IE.
1> if IE "GSM Carrier RSSI" is set to "TRUE":
   2> include optional IE "GSM Carrier RSSI" with a value set to the measured RXLEV to that GSM cell in IE "Inter-RAT measured results list". If no compressed mode pattern sequence specified with measurement purpose "GSM carrier RSSI measurements" is active and according to its capabilities the UE requires compressed mode to measure this, the UE is not required to include the "GSM carrier RSSI" in the IE " Inter-RAT measured results list ", when a MEASUREMENT REPORT is triggered.
1> if the BSIC of reported GSM cell is "verified":
   2> set the CHOICE BSIC to "Verified BSIC" and IE "inter-RAT cell id" to the value that GSM cell had in the IE "Inter-RAT cell info list".
1> if the BSIC of reported GSM cell is "non-verified":
   2> set the CHOICE BSIC to "Non verified BSIC" and the IE "BCCH ARFCN" to the value of that GSM cells ARFCN.
   2> include the IE "Non verified BASIC cause" If the cause for the BSIC not be verified is "BSIC BSIC that was read by the UE.
The requirements for a cell to be considered "verified" or "non-verified" can be found in [19].
**10.3.7.26 Inter-RAT measured results list**

| **Information Element/Group name** | **Need** | **Multi** | **Type and reference** | **Semantics description** | **Version** |
|---|---|---|---|---|---|
| Inter-RAT measurement results | OP | 1 to <maxOther RAT-16> | | | |
| >CHOICE *system* | MP | | | One spare value is needed. | |
| >>GSM | | | | | |
| >>>Measured GSM cells | MP | 1 to <maxRepo rtedGSMC ells> | | | |
| >>>>GSM carrier RSSI | OP | | bit string(6) | RXLEV is mapped to a value between 0 and 63, [46]. When mapping the RXLEV value to the RSSI bit string, the first/leftmost bit of the bit string contains the most significant bit. | |
| >>>>CHOICE BSIC | MP | | | | |
| >>>>>Verified BSIC | | | | | |
| >>>>>>inter-RAT cell id | MP | | Integer(0..< maxCellMea s>-1) | | |
| >>>>>Non verified BSIC | | | | | |
| >>>>>>BCCH ARFCN | MP | | Integer (0..1023) | [45] | |
| >>>>>>Non verified BSIC cause | OP | | Non verified BSIC cause (10.3.7.X) | | REL-7 |

**1.0.3.7.X Non verified BSIC cause**

| **Information Element/Group name** | **Need** | **Multi** | **Type and reference** | **Semantics description** | **Version** |
|---|---|---|---|---|---|
| CHOICE cause | MP | | Non verified BSK,Lsausg. (10.3.7.X) | | RFL-7 |
| >BSIC identification attempted but failed - interference | | | NULL | | REL-7 |
| >BSIC identitication attempted but failed - wrong BSIC | | | BSIC 10.3.8.2 | | REL-7 |
| >BSIC identification not attempted | | | NULL | | REL-7 |

**11.2 PDU definitions** 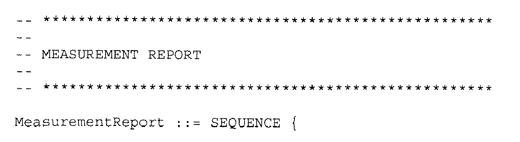 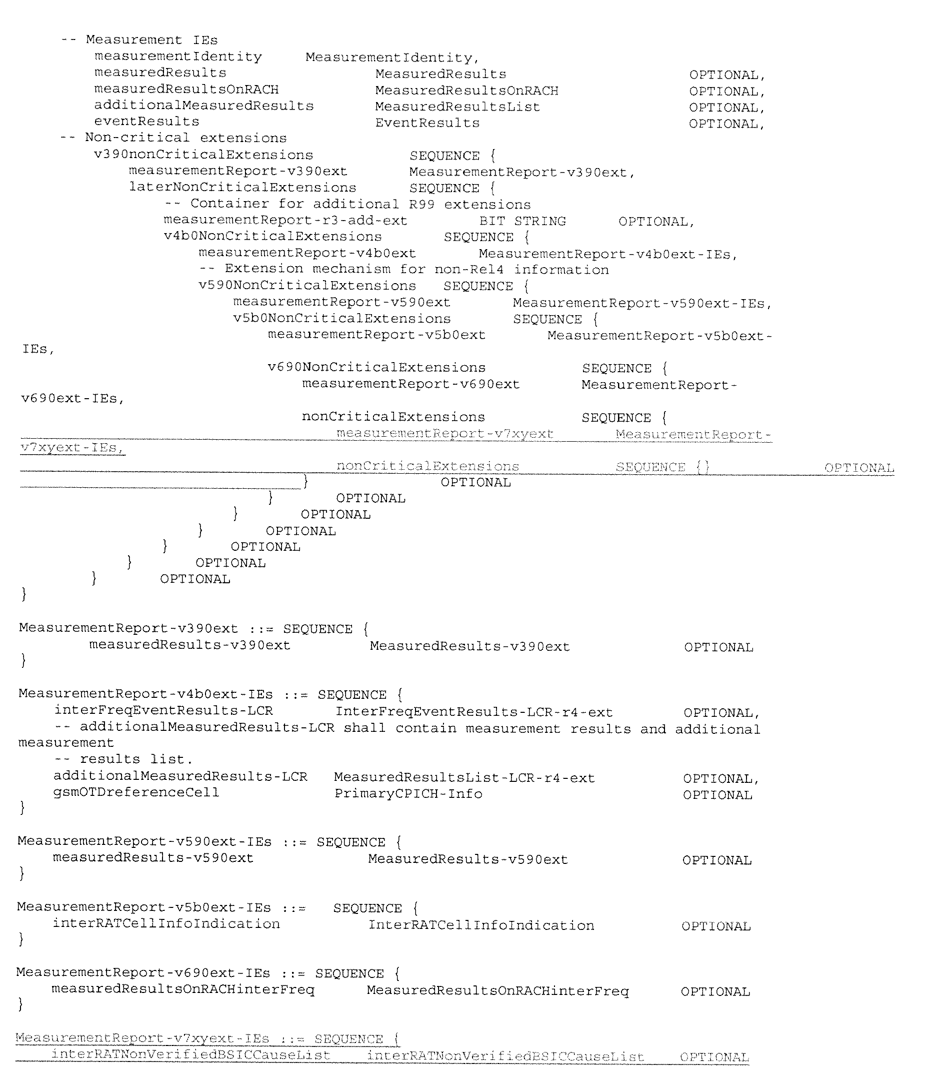 **11.3 Information element definitions** 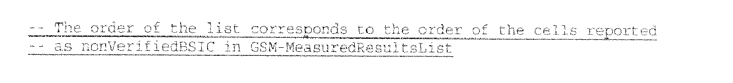 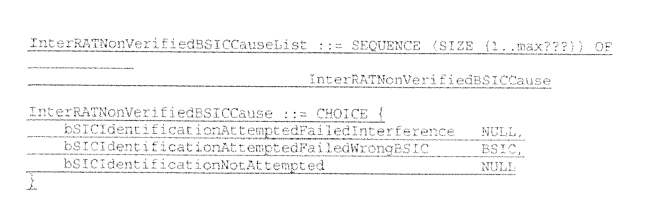 While particular embodiments have been shown and described, it will be apparent to those skilled in the art that changes and modifications may be made without departing from the principles set forth herein. The matter set forth in the foregoing description and accompanying drawings is offered by way of illustration only and not as a limitation.

## Claims

1. A method, comprising:
receiving, while associated with a first network, at least one signal from a first cell and at least one signal from a second cell, wherein the first cell and the second cell are in a second network;
measuring at least one parameter of each of the first signal and the second signal;
attempting to determine whether each of the first cell and the second cell meet a predetermined criterion;
sending a message to provider equipment of the first network that includes a ranking of the first cell and the second cell with respect to the at least one parameter; and
providing in the message, for each of the first cell and the second cell, at least one of an indication that the cell meets the predetermined criterion or an indication of a cause as to why it cannot be determined that the cell meets the predetermined criterion.

2. The method of claim 1, wherein the step of receiving comprises:
receiving the first signal and the second signal while associated with a Universal Terrestrial Radio (UTRA) network.

3. The method of claim 1, wherein the step of receiving comprises:
receiving the first signal and the second signal from a first Global System for Mobile Communications (GSM) cell and a second GSM cell, respectively.

4. The method of claim 1, wherein the step of attempting to determine comprises:
receiving a base station identify code (BSIC) from at least one of the first cell and the second cell;
determining whether or not the BSIC matches an expected BSIC; and wherein if the BSIC does not match an expected BSIC, the step of sending the indication comprises providing an indication that the BSIC received from the first cell is wrong.

5. The method of claim 1, wherein the step of attempting to determine comprises:
monitoring a communication channel over which it is expected that a BSIC will be sent from at least one of the first cell and the second cell;
determining whether signal strength of the communication channel exceeds a predetermined value; wherein if the communication channel signal strength exceeds a predetermined value, and if the BSIC is not detected over the communication channel, the step of providing the indication comprises providing an indication that the BSIC cannot be verified due to interference.

6. The method of claim 1, wherein the step of attempting to determine comprises:
determining whether or not it is possible, during a predetermined time period, to monitor a communication channel over which it is expected that a BSIC will be sent from at least one of the first cell and the second cell; wherein
if it is not possible during the predetermined time period to monitor the communication channel, the step of providing comprises providing an indication that BSIC verification was not attempted.

7. The method of claim 1, wherein the step of measuring comprises:
measuring signal strength of the first signal and the second signal.

8. A method comprising:
establishing communication with a cell in a first network while being associated with another network;
attempting to determine whether or not the cell meets a predetermined criterion; and
if it is not possible to determine if the cell meet the predetermined criterion, providing an indication to provider equipment in the other network reporting a cause as to why it was not possible.

9. The method of claim 8, wherein the step of attempting comprises:
detecting a base station identify code (BSIC) from the cell;
comparing the BSIC to an expected BSIC; and
determining that the BSIC does not match the expected BSIC.

10. The method of claim 9, wherein the step of providing comprises:
sending a message that the BSIC received from the cell is the wrong BSIC.

11. The method of claim 8, wherein the step of attempting comprises:
receiving a signal from a channel over which it is expected that a BSIC will be transmitted by the cell;
determining that signal strength of the signal exceeds a predetermined value; and
determining that a BSIC is not present in the signal.

12. The method of claim 11, wherein the step of providing comprises:
sending a message that BSIC verification is not possible due to interference.

13. The method of claim 8, wherein the step of attempting comprises:
determining it is not possible, during a predetermined period, to detect a BSIC from the cell.

14. The method of claim 13, wherein the step of providing comprises:
sending a message that BSIC verification has not been attempted.

15. A method, comprising:
receiving, while in a first network, a message from a mobile device that includes a ranking of a first cell and a second cell with respect to the at least one parameter and at least one of an indication that each cell meets a predetermined criterion or a cause as to why the mobile device can not determine whether the cell meets the predetermined criterion; and
utilizing the message to initiate handoff of the mobile device to one of the first cell and the second cell.

16. The method of claim 15, wherein the step of receiving comprises:
receiving a ranking of relative signal strength between the mobile device and the first cell and the mobile device and the second cell.

17. The method of claim 16, wherein the step of receiving further comprises:
receiving a ranking that indicates that the signal strength between the mobile device and the first cell is greater than the signal strength between the mobile device and the second cell.

18. The method of claim 17, wherein the step of receiving comprises:
receiving an indication that the mobile device has performed BSIC verification for the second cell and the mobile device was not able to perform BSIC verification for the first cell.

19. The method of claim 18, wherein the step of utilizing comprises initiating handover of the mobile device to the second cell.

20. The method of claim 18, wherein the step of receiving the indication that the mobile device was not able to perform BSIC verification comprises receiving a notification that BSIC verification was unsuccessful for at least one of the following: BSIC verification was not attempted, BSIC verification was not successful due to interference, and a BSIC received by the mobile device did not match an expected BSIC.

21. The method of claim 16, wherein the step of receiving further comprises:
receiving a ranking that indicates that the signal strength between the mobile device and the first cell is greater than the signal strength between the mobile device and the second cell;
receiving an indication that the mobile device has performed BSIC verification for the first cell and the second cell.

22. The method of claim 21, wherein the step of utilizing comprises:
initiating handover of mobile device to the first cell.
